# EUROPÄISCHE PATENTANMELDUNG

(11) **EP 2 019 471 A2**
(43) Veröffentlichungstag der Anmeldung: **28.01.2009**
(21) Anmeldenummer: 08009335.4
(22) Anmeldetag: 21.05.2008
(51) Int. Cl.: H02K 1/18

(54) **Transversalflussmaschine**

(30) Priorität: 24.07.2007 DE 102007034929
(71) Anmelder: Robert Bosch GmbH, 70469 Stuttgart (DE)
(72) Erfinder: Gröning, Ingolf, 97816 Lohr am Main (DE); Kaehler, Christian, 52146 Würselen (DE); Steinbock, Stefan, 97857 Urspringen (DE)
(74) Vertreter: Thürer, Andreas

(57) **Zusammenfassung**

Die Erfindung zeigt eine Transversalflussmaschine, umfassend ein Transversalflussmaschinengehäuse (200) mit einem darin befindlichen Stator (100) und einem um eine Rotationsachse (A) rotierenden Rotor, wobei der Stator (100) eine Spulenanordnung umfasst, wobei die Spulenanordnung wenigstens eine Phasenwicklung zum Anschluss an eine elektrische Phase aufweist, wobei der Stator (100) wenigstens ein erstes Anordnungsmittel (110) zum Anordnen und Ausrichten des Stators (100) innerhalb des Transversalflussmaschinengehäuses (200) aufweist.

## Beschreibung

### Beschreibung

Die Erfindung betrifft eine Transversalflussmaschine, umfassend ein Transversalflussmaschinengehäuse mit einem darin befindlichen Stator und einem um eine Rotationsachse rotierenden Rotor, wobei der Stator eine Spulenanordnung mit wenigstens einer Phasenwicklung zum Anschluss an eine elektrische Phase umfasst.

### Stand der Technik

Eine Transversalflussmaschine (TFM) besteht üblicherweise aus einem feststehendem Primärteil (Stator bzw. Ständer) und einem beweglichen bzw. rotierenden Sekundärteil (Rotor bzw. Läufer), von denen das eine Permanentmagnete aufweist, wohingegen das andere mit einer in Bewegungs- bzw. Drehrichtung verlaufenden Spulenwicklung versehen ist. Eine Transversalflussmaschine ist üblicherweise mit einer ein-, zwei- oder dreiphasigen, d.h. einer eine, zwei oder drei Phasenwicklungen aufweisenden Spulenanordnung ausgestattet, wobei die einzelnen Phasenwicklungen der Spulenanordnung üblicherweise magnetisch und elektrisch von den übrigen Phasenwicklungen isoliert sind.

Eine dreiphasige Rotations-Transversalflussmaschine bekannter Bauart weist einen Stator mit drei elektrisch und magnetisch isolierten, in Umfangsrichtung verlaufenden Phasenwicklungen auf, die jeweils in Eisenjochen zur Magnetflussführung angeordnet sind. Die Joche sind üblicherweise U- bzw. C-förmig ausgebildet und können aus massivem Material oder aus einzelnen, aneinandergefügten Blechen bestehen. Die Joche öffnen sich in radialer Richtung, d.h. senkrecht zur Rotationsachse der Maschine. Dabei zeigen die Schenkel der Joche in Richtung des mit Permanentmagneten versehenen Rotors, wobei die magnetisch aktive Fläche durch die Stirnseite der Jochschenkel bestimmt wird. Ein Phasenmodul weist zusammengehörige Joche mit einer darin verlaufenden Wicklung (Phasenmodulwicklung) auf. Eine Phasenwicklung kann sich auch über mehrere Phasenmodule erstrecken. Das Einsetzen des Stators bzw. der Phasenmodule in das Maschinengehäuse ist dabei sehr aufwendig, da einerseits sowohl auf die korrekte Anordnung der einzelnen Phasenwicklungen in dem Gehäuse und zueinander - bei einer dreiphasigen Maschine beispielsweise um je 120° zueinander verdreht - als auch auf die Verkabelung bzw. deren Unversehrtheit geachtet werden muss. Dadurch kommt es häufig zu Fehlmontagen. Der freie Bauraum ist in üblichen Gehäusen stark begrenzt, was die genannten Schwierigkeiten noch vergrößert.

### Es stellt sich daher die Aufgabe, eine

Transversalflussmaschine anzugeben, bei der die genannten Nachteile vermindert sind und die eine einfachere Montierbarkeit gewährleistet.

### Diese Aufgabe wird gelöst durch eine

Transversalflussmaschine mit den Merkmalen des Patentanspruchs 1. Vorteilhafte Ausgestaltungen sind Gegenstand der Unteransprüche sowie der nachfolgenden Beschreibung.

Eine erfindungsgemäße Transversalflussmaschine weist ein Transversalflussmaschinengehäuse mit einem darin befindlichen Stator und einem um eine Rotationsachse rotierenden Rotor auf, wobei der Stator eine Spulenanordnung umfasst, wobei die Spulenanordnung wenigstens eine Phasenwicklung zum Anschluss an eine elektrische Phase aufweist. Der Stator weist wenigstens ein erstes Anordnungsmittel zum Anordnen und Ausrichten des Stators innerhalb des Transversalflussmaschinengehäuses auf.

Eine Phasenwicklung ist dadurch gekennzeichnet, dass sie zum Anschluss an eine elektrische Phase, z.B. bei Drehstrom U, V oder W, vorgesehen ist. Sie kann auch aus mehreren Einzelwicklungen bzw. Phasenmodulwicklungen bestehen, wie auch der Stator mehrere Phasenmodule aufweisen kann. Der Rotor kann ebenso eine Spulenanordnung umfassen, weist aber vorzugsweise eine Permanentmagnetanordnung auf.

### Vorteile der Erfindung

Durch die erfindungsgemäße Ausgestaltung einer Transversalflussmaschine werden die Herstellung und der Zusammenbau einer derartigen Transversalflussmaschine wesentlich vereinfacht und die Gefahr einer Fehlmontage wird minimiert. Es sind Anordnungsmittel vorgesehen, mit denen die korrekte Positionierung und der sichere Halt des Stators bzw. der Phasenmodule innerhalb des Gehäuses gewährleistet wird.

Zweckmäßigerweise ist das wenigstens eine erste Anordnungsmittel mit wenigstens einem zweiten Anordnungsmittel des Transversalflussmaschinengehäuses in Wirkverbindung bringbar, um den Stator innerhalb des Transversalflussmaschinengehäuses anzuordnen bzw. auszurichten. Mit diesem Merkmal ist es auf einfache Weise möglich, eine vorgebbare definierte Anordnung und Ausrichtung des Stators innerhalb des Gehäuses bereitzustellen, was die Gefahr von Fehlanordnungen weiter reduziert.

Es ist besonders bevorzugt, wenn das wenigstens eine erste Anordnungsmittel als Aussparung und das wenigstens eine zweite Anordnungsmittel als Vorsprung ausgebildet ist oder umgekehrt. Bei einer Aussparung und einem damit zusammenwirkenden Vorsprung handelt es sich um eine besonders einfache und damit besonders zweckmäßige Ausgestaltung des ersten und des zweiten Anordnungsmittels. Eine Aussparung und ein damit zusammenwirkender Vorsprung sind besonders robust, da sie insbesondere keine beweglichen Teile oder andere Befestigungsmittel enthalten, die sich beispielsweise öffnen oder lösen können. Es bietet sich an, dass die eine Aussparung bzw. die mehreren Aussparungen und der eine Vorsprung bzw. die mehreren Vorsprünge axial in Einbaurichtung, welche üblicherweise der Rotationsachse entspricht, verlaufen. Damit ist es möglich, den Stator bzw. die Phasenmodule durch einfaches Einschieben in das Transversalflussmaschinengehäuse korrekt anzuordnen und auszurichten. Die Vorsprünge und Aussparungen können - wie auch alle anderen entsprechenden Anordnungsmittel - bei einer Außenstatoranordnung insbesondere an der Innenseite des Transversalflussmaschinengehäuses und der Außenseite des Stators bzw. der Phasenmodule vorgesehen sein. Bei einer Innenstatoranordnung bietet es sich an, beispielsweise die Aussparung(en) an einer Innenseite eines ringförmigen Stators und den Vorsprung bzw. die Vorsprünge an einer Außenseite eines Gehäusemittelbauteils, bspw. eine Zapfens, vorzusehen, wobei der Stator bzw. die Phasenmodule auf das Bauteil geschoben werden.

Bei einer besonders bevorzugten Ausgestaltung ist eine Anzahl von M × N Aussparungen vorgesehen, wobei N die Anzahl der zum Anschluss vorgesehenen elektrischen Phasen, üblicherweise drei, und M eine natürliche Zahl ist. Die Aussparungen sind zweckmäßigerweise in Umfangsrichtung gleichverteilt angeordnet. Damit kann auf einfache Weise die korrekte Positionierung der einzelnen Phasenwicklungen bzw. der Phasenmodule erreicht werden, wobei die Ausrichtung in Abhängigkeit von der Anzahl der elektrischen Phasen steht. Bei einer dreiphasigen Maschine sollten beispielsweise die Phasenwicklungen um je 120° zueinander verdreht angeordnet werden, um eine Drehmomentwelligkeit bzw. ein Drehmomentripple zu minimieren. Gemäß den oben genannten Zusammenhang weist eine dreiphasige Maschine daher drei oder sechs oder neun usw. Aussparungen auf, d.h. die Aussparungen sind um 120° oder um 60° oder um 30° usw. beabstandet. Damit ist es möglich, durch einfaches Verdrehen der mit den Aussparungen bzw. den zusammenwirkenden Vorsprüngen versehenen Komponenten die winkelgerechte Anordnung bereitzustellen.

Zweckmäßigerweise sind weniger Vorsprünge als Aussparungen vorgesehen. Damit ist es möglich, mittels der nicht mit einem Vorsprung beaufschlagten Aussparungen Kanäle bereitzustellen, in denen beispielsweise Zuleitungen oder Anschlussleitungen für die Phasen oder für Sensoren bspw. zu einem Anschlussstecker oder Kasten (Klemmenkasten) geführt werden können. Ebenso ist es möglich, beispielsweise Kühlleitungen durch die genannten Kanäle zu führen, wodurch eine gute Kühlung des Stators erzielt werden kann. Ebenso können bspw. Sensoren in den Kanälen angeordnet werden. Es versteht sich, dass ebenso eine gleiche Anzahl von Aussparungen und Vorsprüngen vorgesehen sein kann, wobei dann aber die genannten Vorteile nicht erreicht werden.

Gemäß einer weiteren besonders bevorzugten Ausgestaltung der Erfindung ist der Stator als Außenstator mit außenseitigen Aussparungen ausgebildet und das Transversalflussmaschinengehäuse weist innenseitig Vorsprünge auf. Diese Ausführungsform ermöglicht das besonders einfache und zuverlässige Einsetzen der Statormodule in das Transversalflussmaschinengehäuse. Das Vorsehen von Vorsprüngen ist insbesondere an der Gehäuseinnenseite unproblematisch, da es sich bei derartigen Gehäusen in der Regel um Stangenpressprofile oder um gegossenes Material handelt, so dass die Vorsprünge lediglich in der Form (Press- bzw. Gussform) vorhanden sein müssen.

Es versteht sich, dass die vorstehend genannten und die nachstehend noch zu erläuternden Merkmale nicht nur in der jeweils angegeben Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnungen ausführlich beschrieben.

### Figurenbeschreibung

- Figur 1: zeigt schematisch eine bevorzugte Ausgestaltung einer Statorkomponente einer Transversalflussmaschine; und
- Figur 2: zeigt schematisch einen Querschnitt durch eine bevorzugte Ausgestaltung eines Transversalflussmaschinengehäuses.

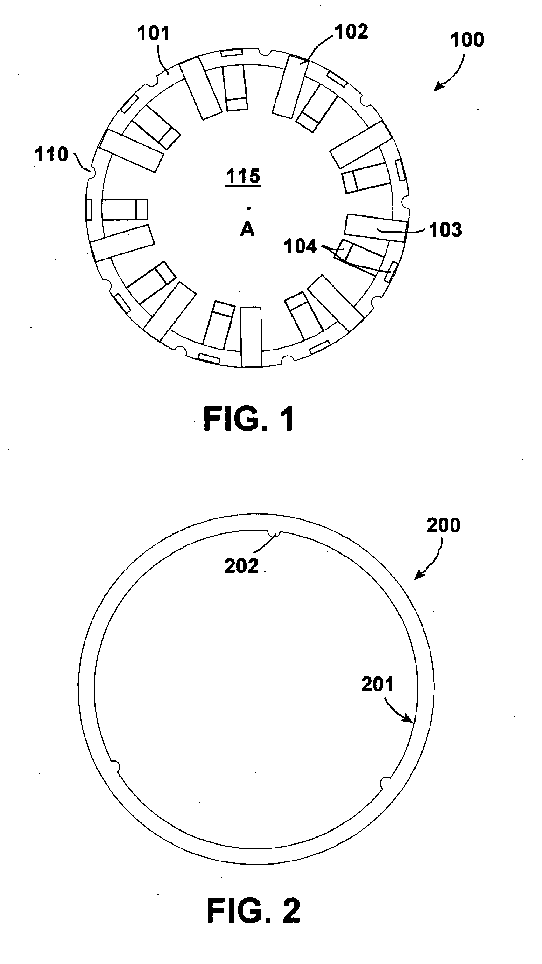

In Figur 1 ist schematisch ein Teil eines Phasenmoduls 100 eines Stators in Draufsicht gezeigt. Das Phasenmodul umfasst einen Phasenmodulrücken 101 und daran angebrachte Polelemente 102. Die Polelemente 102 sind C-förmig mit einem Polelementrücken 103 und zwei Polelementschenkeln 104 ausgebildet und alternierend in Umfangsrichtung am Phasenmodulrücken 101 befestigt. In der gezeigten Draufsicht sind somit die Polelementrücken 103 der Polelemente 102 alternierend über und unter dem Phasenmodulrücken 101 angeordnet. Innerhalb der C-förmigen Öffnung zwischen den Polelementschenkeln 104 der Polelemente 102 verläuft eine Phasenmodulwicklung (nicht gezeigt), die in Abhängigkeit von der Anzahl der Phasenmodule und der Phasenwicklungen Bestandteil einer Phasenwicklung oder eine Phasenwicklung selbst sein kann. Innerhalb des Phasenmoduls 100 ist ein Freiraum 115 zur Aufnahme des Rotors vorgesehen.

Alle Phasenmodule bzw. Phasenmodulwicklungen, die zum Anschluss an dieselbe elektrische Phase vorgesehen sind, bilden die sogenannte Phasenwicklung. Ist die Transversalflussmaschine zum Anschluss an einen dreiphasigen Drehstrom vorgesehen, weist sie drei Phasenwicklungen auf, die jeweils mehrere Phasenmodulwicklungen umfassen können. Die Phasenwicklungen bilden zusammen die Spulenanordnung der Transversalflussmaschine.

Das Phasenmodul 100 ist Teil einer dreiphasigen Transversalflussmaschine und weist im gezeigten bevorzugten Ausführungsbeispiel neun Aussparungen 110 im Phasenmodulrücken 101 auf, die parallel zur Rotationsachse A der Transversalflussmaschine verlaufen und vorzugsweise in den Bereichen des Phasenmodulrückens 101 ausgeführt sind, die nicht von einem Polelement 102 beaufschlagt sind. Bei einer dreiphasigen Transversalflussmaschine weist der Phasenmodulrücken eines jeden Phasenmoduls 100 vorteilhafterweise zumindest drei Aussparungen 110 oder ein ganzzahliges Vielfaches davon auf. Die Aussparungen 110 sind vorteilhafterweise gleich beabstandet in Umfangsrichtung am Phasenmodulrücken 101 verteilt. Es sei darauf hingewiesen, dass die Anzahl der Aussparungen in keinem bestimmten Zusammenhang zur Anzahl der Polelemente steht und die Anzahl der abgebildeten Polelemente nur beispielhaft zu verstehen ist.

In Figur 2 ist eine bevorzugte Ausgestaltung eines Transversalflussmaschinengehäuses 200 schematisch im Querschnitt dargestellt und insgesamt mit 200 bezeichnet. Das Transversalflussmaschinengehäuse 200 ist zur Aufnahme eines Stators mit Phasenmodulen 100 gemäß Figur 1 sowie eines innenlaufenden Rotors (nicht gezeigt), der insbesondere eine Permanentmagnetanordnung aufweist, geeignet. Das Transversalflussmaschinengehäuse 200 weist an seiner Innenseite 201 Vorsprünge 202 auf, die zur Wechselwirkung mit den Aussparungen 110 gemäß Figur 1 vorgesehen sind. Das Transversalflussmaschinengehäuse 200 weist innenseitig drei gleich beabstandete Vorsprünge 202 auf, die mit jeder dritten in Umfangsrichtung angeordneten Aussparung 110 des Phasenmoduls 100 zusammenwirken können.

Gemäß der gezeigten bevorzugten Ausführungsform weist das Transversalflussmaschinengehäuse 200 weniger Vorsprünge 202 auf als das Phasenmodul 100 Aussparungen 110. Auf diese Weise können durch die nicht ausgefüllten Aussparungen 110 vorteilhafterweise Kanäle bereitgestellt werden, die insbesondere zur Aufnahme von Zuleitungen, Kühlleitungen, Sensoren usw. geeignet sind.

Mittels der dargestellten Anordnungsmittel ist es auf einfache Weise möglich, beispielsweise drei jeweils eine Phasenwicklung darstellende Phasenmodule mit ihren zugehörigen Phasenmodulwicklungen jeweils um 120° zueinander verdreht in das Transversalflussmaschinengehäuse einzubringen. Die Aussparungen 110 und Vorsprünge 202 wirken dabei zusammen, um die Anordnung und Führung der Phasenmodule bzw. des Stators zu gewährleisten. Die nicht von einem Vorsprung 202 beaufschlagten Aussparungen 110 können vorteilhafterweise insbesondere als Leitungs- oder Kühlkanäle, Thermosensoren verwendet werden.

Es versteht sich, dass in den dargestellten Figuren nur eine besonders bevorzugte Ausführungsform der Erfindung dargestellt ist. Daneben ist jede andere Ausführungsform, insbesondere mit einer anderen Art oder Anzahl der Anordnungsmittel denkbar, ohne den Rahmen dieser Erfindung zu verlassen.

### Bezugszeichen

- 100: Phasenmodul
- 101: Phasenmodulrücken
- 102: Polelement
- 103: Polelementrücken
- 104: Polelementschenkel
- 110: Aussparung
- 115: Freiraum

- 200: Transversalflussmaschinengehäuse
- 201: Innenwand
- 202: Vorsprung

## Patentansprüche

1. Transversalflussmaschine, umfassend ein Transversalflussmaschinengehäuse (200) mit einem darin befindlichen Stator (100) und einem um eine Rotationsachse (A) rotierenden Rotor, wobei der Stator (100) eine Spulenanordnung umfasst,
wobei die Spulenanordnung wenigstens eine Phasenwicklung zum Anschluss an eine elektrische Phase aufweist,
wobei der Stator (100) wenigstens ein erstes Anordnungsmittel (110) zum Anordnen und Ausrichten des Stators (100) innerhalb des Transversalflussmaschinengehäuses (200) aufweist.

2. Transversalflussmaschine gemäß Anspruch 1, wobei das wenigstens eine erste Anordnungsmittel (110) mit wenigstens einem zweiten Anordnungsmittel (202) des Transversalflussmaschinengehäuses (200) in Wirkverbindung bringbar ist, um den Stator (100) innerhalb des Transversalflussmaschinengehäuses (200) anzuordnen.

3. Transversalflussmaschine gemäß Anspruch 2, wobei das wenigstens eine erste Anordnungsmittel als Aussparung (110) und das wenigstens eine zweite Anordnungsmittel als Vorsprung (202) ausgebildet ist oder umgekehrt.

4. Transversalflussmaschine gemäß Anspruch 3, wobei eine Anzahl von M × N Aussparungen (110) vorgesehen ist, wobei N die Anzahl der zum Anschluss vorgesehenen elektrischen Phasen und M eine natürliche Zahl ist.

5. Transversalflussmaschine gemäß Anspruch 3 oder 4, wobei weniger Vorsprünge (202) als Aussparungen (110) vorgesehen sind.

6. Transversalflussmaschine gemäß Anspruch 4 und 5 wobei der Stator als Außenstator (100) mit außenseitigen Aussparungen (110) ausgebildet ist und das Transversalflussmaschinengehäuse (200) innenseitig Vorsprünge (202) aufweist.
